# EUROPÄISCHE PATENTSCHRIFT

(11) **EP 2 640 570 B1**
(45) Veröffentlichungstag und Bekanntmachung des Hinweises auf die Patenterteilung: **30.03.2016**
(21) Anmeldenummer: 11808155.3
(22) Anmeldetag: 12.11.2011
(51) Int. Cl.: B30B 1/18, B30B 11/02, B29C 33/30

(54) **KERAMIKPULVER- UND/ODER METALLPULVER-PRESSENWERKZEUG, KERAMIKPULVER- UND/ODER METALLPULVER-PRESSE, MODULARES SYSTEM MIT EINEM SOLCHEN PRESSENWERKZEUG, VERFAHREN ZUM ZUSAMMENSETZEN UND ZUM BETREIBEN EINES KERAMIKPULVER- UND/ODER METALLPULVER-PRESSENWERKZEUGS ODER EINER PRESSE**
CERAMIC-POWDER AND/OR METAL-POWDER PRESS TOOL, CERAMIC-POWDER AND/OR METAL-POWDER PRESS, MODULAR SYSTEM WITH SUCH A PRESS TOOL, METHOD FOR ASSEMBLING AND OPERATING A CERAMIC-POWDER AND/OR METAL-POWDER PRESS TOOL OR A PRESS
OUTIL DE PRESSE À POUDRE CÉRAMIQUE ET/OU À POUDRE MÉTALLIQUE ET/OU PRESSE À POUDRE MÉTALLIQUE, SYSTÈME MODULAIRE COMPORTANT UN TEL OUTIL DE PRESSE, ET PROCÉDÉ POUR ASSEMBLER ET FAIRE FONCTIONNER UN OUTIL DE PRESSE À POUDRE CÉRAMIQUE ET/OU À POUDRE MÉTALLIQUE OU UNE PRESSE

(30) Priorität: 16.11.2010 DE 102010051513
(43) Veröffentlichungstag der Anmeldung: 25.09.2013
(73) Patentinhaber: Dorst Technologies GmbH & Co. KG, 82431 Kochel (DE)
(72) Erfinder: MENZEL, Roland, 82431 Kochel am See (DE); SILBERMANN, Michael, Thomas, 83673 Bichl (DE); METZ, Mathias, 82431 Kochel am See (DE)
(74) Vertreter: Thiele, Thomas
(86) Internationale Anmeldenummer: PCT/DE2011/001983
(87) Internationale Veröffentlichungsnummer: WO 2012/065597

(56) Entgegenhaltungen:
- EP-A2- 1 658 963
- DE-A1- 1 627 919
- DE-B4- 10 254 656
- US-A- 3 868 201
- US-A- 4 370 119
- US-A1- 2002 090 412
- US-A1- 2009 317 507

## Beschreibung

Die Erfindung bezieht sich auf ein Keramikpulver- und/oder Metallpulver-Pressenwerkzeug mit den oberbegrifflichen Merkmalen gemäß Patentanspruch 1, auf eine Keramikpulver- und/oder Metallpulver-Presse mit einem solchen Pressenwerkzeug, auf ein modulares System mit einem solchen Pressenwerkzeug oder einer solchen Presse, auf ein Verfahren zum Zusammensetzen eines solchen Keramikpulver- und/oder Metallpulver-Pressenwerkzeugs oder einer solchen Presse bzw. auf ein Verfahren zum Betreiben einer solchen Keramikpulver- und/oder Metallpulver-Presse.

Beispielhaft ist aus DE 102 54 656 B4 eine Keramikpulver- und/oder Metallpulver-Presse mit den Merkmalen des Oberbegriffs des Anspruchs 1 bekannt. Diese umfasst ein Keramikpulver- und/oder Metallpulver-Pressenwerkzeug mit zumindest einem Grundkörper, mit einer Vielzahl von zumindest zwei Stempeln, welche in einer Pressstellung von einer Seite aus in eine mit Keramik- und/oder Metallpulver befüllte Matrizenöffnung einer Matrize eintauchbar angeordnet sind, mit einer Vielzahl von zumindest zwei Stempelträgern, an welchen jeweils einer der Stempel angesetzt ist, wobei zumindest ein Teil der Stempelträger an jeweils zumindest zwei Verstellantrieben ankoppelbar ist und wobei die Stempelträger relativ zueinander und relativ zu dem Grundkörper verstellbar angeordnet sind, und mit Festanschlagseinrichtungen, welche angeordnet sind, eine Presskraft zumindest teilweise in einer Pressendstellung von den Stempeln über den Grundkörper abzuleiten.

Ausgebildet sind dabei die Verstellantriebe durch Hydraulik-Zylinderanordnungen, wobei zwei Kolben der Zylinderanordnungen durch das Werkzeug bis zu dem zugeordneten Stempelträger ragen und fest mit dem Stempelträger verbunden sein müssen. Problematisch ist dabei, dass aus Kostengründen eine einzige Pumpe zur Versorgung beider Zylinderanordnungen verwendet wird und somit beide Zylinderanordnungen durch eine gemeinsame Regelstrecke angesteuert werden. Um einen unerwünschten Druckausgleich zwischen den Zylinderkammern der beiden Zylinderanordnungen zu vermeiden, muss daher einerseits eine sehr starre Verbindung zwischen den Kolben und dem zugeordneten Stempelträger und andererseits zusätzlich eine Führungsanordnung für die Stempelträger vorgesehen sein. Als Führungsanordnung dienen Führungsstangen. Solche Führungsstangen führen von einem Grundkörper durch sämtliche Stempelträger und dienen in der Regel auch zum Führen der Matrize.

Die Stempelträger sind entsprechend als insbesondere quadratische und seitlich quer zur Pressachse weit dimensionierte Platten ausgebildet. Nachteilhaft bei einer solchen Anordnung ist insbesondere auch, dass eine Vielzahl verschiedenartig geformter und dimensionierter Pressteile mit einem solchen Werkzeug pressbar sein muss. Entsprechend muss jede der Komponenten in der Lage sein, einen größt möglichen Presskraftanteil, welcher auf dem von der Platte abgestützten Stempel aufzunehmen ist, weiter zu übertragen. Entsprechend müssen alle Komponenten derart groß in Richtung der Pressachse und in Richtung der Ebene quer zur Pressachse dimensioniert sein, dass Kräfte bis hin zu nahezu der vollständigen Presskraft des Hauptpresszylinders aufgenommen werden können. Dies macht einen großen Raumbedarf erforderlich. Außerdem ist ein hoher Materialverbrauch für die Konstruktion der einzelnen Komponenten erforderlich, was nicht nur das Werkzeug sehr schwer werden lässt, sondern auch die Materialkosten sehr hoch steigen lässt. Dies macht insbesondere auch groß dimensionierte verstellbare Festanschläge erforderlich. Das hat auch zur Folge, dass wegen eines großen Raumbedarfs der Festanschläge Plattenantriebe bzw. Verstellantriebe für die Stempelträger weit außerhalb bzw. weit beabstandet von der Pressachse anzuordnen sind. Entsprechend erhöht sich eine Dicke der Stempelträger, damit diese nicht durchbiegen.

Um hinsichtlich verschiedenartigster Pressteile und mit Blick auf die Dimensionierung der einzelnen Komponenten variabel zu sein, muss ein maximaler Stempelträgerhub zwischen zwei der Stempelträger beispielsweise mit 100 mm möglich sein. Um Variabilität zu erhalten, gilt dies für dann letztendlich jeden Abstand zwischen jeder beliebigen Kombination zweier zueinander benachbarter der Stempelträger. Da die Stempelträger unabhängig voneinander einen vollen Hub fahren können sollen, und die Stempelträger übereinander angeordnet sind, addieren sich die Hübe und die Höhen der Stempelträger in Bezug auf die dadurch zunehmende Bauhöhe. Um solche Höhen zu überbrücken, werden üblicherweise zusätzliche Distanzstücke zwischen Stempelträger und dem Werkzeug oder weiteren Werkzeugkomponenten eingefügt.

Bei Anordnungen mit höhenverstellbaren Festanschlägen im Bereich der Grundplatte müssen auf den Festanschlägen hohe Töpfe aufgesetzt werden, was zudem Probleme hinsichtlich einer Stauchung der Töpfe unter der einwirkenden Presskraft zur Folge hat.

US 2009/0317507 A1 beschreibt eine Pulverpresse. Diese weist Stempel tragende Platten und eine Matrize auf, welche relativ zueinander verstellbar sind. Als Antrieb für diese dient jeweils ein elektrischer Motor. Um eine der Platten oder die Matrize zu verstellen, ist diese Platte oder Matrize mit dem dieser zugeordneten Antrieb mittels eines zentralen Zahnrads und zwei Getrieben verbunden.

Die Aufgabe der Erfindung besteht darin, ein Keramikpulver- und/oder Metallpulver-Pressenwerkzeug und eine Keramikpulver- und/oder Metallpulver-Presse mit einem solchen Pressenwerkzeug hinsichtlich deren Aufbau zu vereinfachen und Verfahren zum Zusammensetzen und zum Betreiben einer solchen Keramikpulver- und/oder Metallpulver-Presse oder deren Werkzeugs bereitzustellen. Insbesondere soll eine erforderliche Bauhöhe bei Erhaltung oder Vergrößerung der Stabilität reduziert werden.

Insbesondere soll ein Presswerkzeug mit mehreren Ebenen bereitgestellt werden, bei dem Durchmesser von Anschraubflächen auch für das innerste Werkzeug bzw. den innersten Stempel ausreichend groß gewählt werden, um alle denkbaren Mittelstifte bzw. Stempel anbringen zu können. Vorzugsweise sollen Durchmesser verschiedener Ebenen nach oben hin bzw. in Richtung einer Matrize hin nicht immer größer werden müssen als in einer darunter liegenden Ebene. Eine Lage von Festanschlägen soll möglichst variabel festlegbar sein. Insbesondere soll jede Ebene in der Lage sein, eine höchste Presskraft aufzunehmen, um hinsichtlich verschiedenartigster Pressteile variabel zu bleiben. Eine Materialstärke der Stempelträger sowie der weiteren Komponenten sollte gering gehalten werden können, um Bauhöhe, Gewicht und Materialkosten reduzieren zu können. Eine Ansteuerung von Verstellantrieben und deren Ankopplung an Stempelträger soll möglichst einfach ausgestaltet sein. Auch Hübe einzelner Stempelträger sollen auf den für das jeweilige Pressteil tatsächlichen Bedarf reduzierbar sein. Soweit möglich, sollen eine große Nachgiebigkeit von Komponenten und thermische Einflüsse durch eine Länge von Komponenten als störende Kriterien ausgeschlossen werden.

Diese Aufgabe wird durch ein Keramikpulver- und/oder Metallpulver-Pressenwerkzeug mit den Merkmalen des Patentanspruchs 1, durch eine Keramikpulver- und/oder Metallpulver-Presse mit einem solchen Pressenwerkzeug und den Merkmalen des Patentanspruchs 7, durch ein modulares System mit den Merkmalen des Patentanspruchs 11 und insbesondere durch ein Verfahren zum Zusammensetzen eines solchen Keramikpulver- und/oder Metallpulver-Pressenwerkzeugs oder einer solchen Presse mit den Merkmalen des Patentanspruchs 12 bzw. durch ein Verfahren zum Betreiben einer solchen Keramikpulver- und/oder Metallpulver-Presse mit den Merkmalen des Patentanspruchs 15 gelöst. Vorteilhafte Ausgestaltungen sind Gegenstand von abhängigen Ansprüchen.

Bevorzugt wird demgemäß eine Keramikpulver- und/oder Metallpulver-Pressenwerkzeug mit zumindest einem Grundkörper, mit einer Vielzahl von zumindest zwei Stempeln, welche in einer Pressstellung von einer Seite aus in eine mit Keramik- und/oder Metallpulver befüllte Matrizenöffnung einer Matrize eintauchbar angeordnet sind, mit einer Vielzahl von zumindest zwei Stempelträgern, an welchen jeweils zumindest einer der Stempel angesetzt ist, wobei zumindest ein Teil der Stempelträger an jeweils zumindest zwei Verstellantrieben ankoppelbar ist und wobei die Stempelträger relativ zueinander und relativ zu dem Grundkörper verstellbar angeordnet sind, und mit Festanschlagseinrichtungen, welche angeordnet sind, eine Presskraft zumindest teilweise in einer Pressendstellung von den Stempeln über den Grundkörper abzuleiten, wobei zumindest einer der Stempelträger an zumindest zwei von Koppelstangen, Spindeln und/oder Spindelmuttern angekoppelt oder befestigt ist, wobei jede solcher Koppelstangen an jeweils einen eigenen solchen Verstellantrieb koppelbar oder befestigbar ist und wobei jede solcher Spindeln und/oder Spindelmuttern Bestandteil jeweils eines eigenen solchen Verstellantriebs ist.

Ein solches Pressenwerkzeug kann als alleinstehende Komponente unterhalb oder oberhalb einer Matrize angeordnet werden oder auch paarweise unterhalb und/oder oberhalb einer Matrize angeordnet werden. Unter einer Pressstellung wird eine Stellung der Komponenten des Werkzeugs im in eine Presse eingesetzten Zustand verstanden, bei welcher die Stempel von beiden Seiten in eine Matrizenöffnung eintauchen und darin befindliches Pulver bereits komprimieren. Unter einer Pressendstellung wird eine Stellung verstanden, bei welcher eine vorzugsweise maximale Presskraft über die Stempel auf das in der Matrizenöffnung befindliche Material einwirkt. In der Pressendstellung liegen somit die Stempelträger insbesondere fest bzw. kraftübertragend auf den Festanschlägen auf. Durch den Einsatz von Festanschlägen wird in der Pressendstellung vorzugsweise zugleich eine Entlastung von Verstellantrieben und deren Komponenten vorgenommen, in dem auf die Stempel einwirkende Presskräfte über die Stempelträger und Festanschläge in den Grundkörper und darüber in den Rahmen umgeleitet werden.

Besonders vorteilhaft ist eine solche Anordnung eines Pressenwerkzeugs, wenn die Verstellantriebe elektromotorisch, insbesondere als Spindelantriebe ausgestaltet sind. Dies ermöglicht eine besonders sensible und zugleich harte Ansteuerung der Stempelträger über die Koppelstangen, Spindeln oder Spindelmuttern, was direkt auch zu einer kompakten möglichen Bauweise führt. Alle Komponenten müssen lediglich so ausgelegt werden, dass die entsprechend maximal einwirkenden Presskraftanteile der jeweils zugeordneten Stempel in der Pressendstellung abgeleitet werden können. Dadurch ergibt sich eine reduzierte, insbesondere auch optimierte Bauhöhe für jede der Komponenten in Richtung der Pressachse bzw. in Richtung der pulverbefüllten Matrizenöffnung. Durch die Reduzierung der Komponentenhöhen in Richtung der Pressachse und die kompakte Bauweise ist auch eine Reduzierung der Dimension der Komponenten in der Ebene senkrecht zur Pressachse als direkte Konsequenz umsetzbar. Weiterhin kann durch ein modulares System ein Spielraum für Hübe der Stempelträger auf ein tatsächlich für die jeweils zu verstellenden Stempel erforderliches Maß reduziert werden, was zu einer weiteren Reduzierung der Bauhöhe führt.

Bevorzugt wird, wenn bei dem Pressenwerkzeug ein Teil der Festanschlageinrichtungen oder dazwischen angeordneter Stützeinrichtungen Lager aufweisen, durch welche die Koppelstangen geführt sind. Solche Lager sind zwar für eine Vielzahl von Ausgestaltungen oder modularen Anordnungen des Pressenwerkzeugs nicht erforderlich, unterstützen jedoch vorteilhaft die Anordnung der einzelnen Komponenten des Pressenwerkzeugs und erhöhen die Gesamtstabilität der Anordnung.

Auch eigenständig vorteilhaft ist ein solches Pressenwerkzeug, bei dem die Festanschlagseinrichtung, welche den der Stempel und dessen Stempelträger mit der in Pressendstellung darüber in Relation zu den übrigen Stempeln höchsten einwirkenden Kraft abstützt, als höhenverstellbare Festanschlagseinrichtung mit einem kraftübertragendes verstellbares Element und einem kraftübertragenden Gegenelement ausgebildet ist, bei welcher das verstellbare Element einen Festanschlag-Anschlag aufweist, wobei der Festanschlag-Anschlag gegen einen Festanschlag-Gegenanschlag des kraftübertragenden Gegenelements verstellt ist und bei dem zumindest eine andere der Festanschlagseinrichtungen als höhenverstellbare Festanschlagseinrichtung ausgebildet ist. Eine solche Anordnung ermöglicht eine Reduzierung der in einem Modulsystem zur Verfügung zu stellenden Komponenten, da generell höhenverstellbare Festanschläge für insbesondere alle Stempel bzw. deren Stempelträger einsetzbar sind. Vorzugsweise wird derjenige höhenverstellbare Festanschlag, über welchen der höchste wirkende Presskraftanteil zu leiten ist, vollständig zusammengefahren, so dass feste Anschlagflächen aneinander anliegen und vorzugsweise keine oder nur eine reduzierte Belastung auf ein Gewinde übertragen werden kann. Insbesondere lässt sich durch solche Anordnungen oder die Festlegung geeigneter Festanschlagpositionen innerhalb der Gesamtanordnung auch eine insbesondere höchste Präzision der Dimension des Pressteils erzielen.

Bei einem solchen Pressenwerkzeug kann zumindest eine der Festanschlagseinrichtungen und/oder zumindest eine zwischen den Festanschlagseinrichtungen angeordnete Stützeinrichtung einen Stempelträger-Aufnahmeraum umschließen oder aufweisen, welcher eine freie Bewegung eines der im Aufnahmeraum aufgenommenen Stempelträgers in und entgegen einer Pressrichtung der Stempel ermöglicht. Bei einer solchen Anordnung wird die Kraft bevorzugt über eine den Aufnahmeraum vorzugsweise ringförmig umschließende Wandung des den Aufnahmeraum umschließenden Körpers abgeleitet, insbesondere zentral oder mittig abgeleitet.

Bevorzugt wird, wenn bei einem solchen Pressenwerkzeug die Stempelträger eine längliche, stegförmige oder sternförmige Erstreckung aufweisen und dadurch ausgebildete Stege über Koppelstangen an den Verstellantrieben angekoppelt oder befestigt sind.

Die Verstellantriebe übertragen bzw. übernehmen vorzugsweise keine Presskraftanteile bzw. allenfalls reduzierte Kräfte während eines Pulvertransports beim Verstellen der Stempelträger in Richtung der Matrizenöffnung. Solche reduzierte Kräfte können dabei insbesondere auch deutlich unter 1% der Presskraft liegen. Für den Fall, dass größere Kräfte der Verstellantriebe oder über die Ebene quer zur Pressachse besonders kontrollierte Verstellungen des Stempelträgers erfolgen sollen, können auch mehr als zwei Verstellantriebe über entsprechende Koppelstangen und weitere Stege oder Vorsprünge des Stempelträgers angekoppelt werden.

Umsetzbar ist vorteilhaft auch ein solches Pressenwerkzeug mit einer Vielzahl von Verstellantrieben, wobei an zumindest einen der Stempelträger zumindest zwei der Verstellantriebe angekoppelt sind und die Verstellantriebe jeweils einen Elektromotor aufweisen und jeder der Elektromotoren eine eigene Regelung aufweist, wobei die Regelungen der einen gemeinsamen Stempelträger verstellenden Verstellantriebe aufeinander synchronisiert angesteuert sind.

Eigenständig vorteilhaft ist demgemäß eine Keramikpulver- und/oder Metallpulver-Presse mit zumindest einer Aufnahme- und/oder Befestigungseinrichtung, welche ausgestaltet ist zum Einsetzen eines solchen Pressenwerkzeugs, mit einem Pressantrieb, dessen Presskraft über die zumindest eine Aufnahme- und/oder Befestigungseinrichtung einkoppelbar ist in den Grundkörper und in einen dem Grundkörper gegenüberliegenden weiteren Grundkörper dieses oder eines gegenüberliegenden Werkzeugs, und mit einer Vielzahl von Verstellantrieben, wobei an zumindest einen der Stempelträger zumindest zwei der Verstellantriebe angekoppelt sind. Die Verstellantrieben ermöglichen so u.a., die Stempelträger relativ zueinander und relativ zu dem Grundkörper zu verstellen.

Bevorzugt wird auch eigenständig erfinderisch eine solche Presse, bei der zumindest ein Teil der Verstellantriebe räumlich außerhalb, insbesondere unter- oder oberhalb einer Kraftstrecke angeordnet ist, wobei die Kraftstrecke in Pressendstellung gebildet wird durch zumindest den oder die Grundkörper, die Festanschlagseinrichtungen und die Stempel.

Insbesondere sind die Verstellantriebe dabei auch außerhalb einer sogenannten Traverse als einem das Werkzeug bzw. die Werkzeuge umschließenden Rahmenelement der Presse angeordnet. Mit anderen Worten geht kein Anteil des Kraftflusses der eigentlichen Presskraft durch die Verstellantriebe. Unter der eigentlichen Presskraft wird dabei insbesondere diejenige Kraft verstanden, welche in einer Pressendstellung auf die Stempel bzw. auf das Pulver einwirkt. Nicht darunter verstanden wird dabei insbesondere eine Kraft, welche während einer Verstellbewegung der Stempel mittels der Verstellantriebe durch das Fahren der Stempel in der bzw. in die Matrizenöffnung auf das Pulver einwirkt, auch wenn dabei ein Pulvertransport und bereits eine gewisse Vorverdichtung erfolgen kann.

Vorteilhaft ist vor allem eine solche Presse, bei der die Verstellantriebe jeweils einen Elektromotor aufweisen und jeder der Elektromotoren eine eigene Regelung aufweist, wobei dies insbesondere gilt, wenn die Regelungen der einen gemeinsamen Stempelträger verstellenden Verstellantriebe mittels einer Steuereinrichtung aufeinander synchronisiert angesteuert sind. Während der Hauptpressantrieb insbesondere hydraulisch oder elektrisch ausgebildet sein kann, sind somit die Verstellantriebe bevorzugt elektrisch ausgestaltet.

Eigenständig vorteilhaft ist insbesondere ein Werkzeug für eine solche Presse mit elektrisch betriebenen Verstellantrieben.

Bei einer solchen Presse kann die Matrize in einem Pressenrahmen der Presse mittels einer Matrizen-Verstelleinrichtung parallel zur Verstellrichtung der Stempel verstellbar gelagert sein. Die Matrize ist dadurch unabhängig von den Komponenten des Pressenwerkzeugs eigenständig am Pressenrahmen gelagert.

Ebenfalls eigenständig vorteilhaft ist demgemäß ein modulares System eines solchen Keramikpulver- und/oder Metallpulver-Pressenwerkzeugs oder ein modulares System einer solchen Keramikpulver- und/oder Metallpulver-Presse mit zumindest zwei frei nach Bedarf für ein zu pressendes Pressteil wählbaren Komponenten aus der Gruppe der Stützeinrichtungen, der Festanschlageinrichtungen, optional einschließlich nicht höhenverstellbaren Festanschlägen, der Koppelstangen und der Stempelträger, wobei die zumindest zwei der Komponenten mit jeweils verschiedenen variabel verfügbaren Dimensionen bereitgestellt sind.

In einem solchen modularen System kann vorzugsweise für jede der Komponenten eine Vielzahl von unterschiedlich dimensionierten Komponenten pro Ebene des modularen Systems bereitgestellt werden. So können sich die einzelnen der Komponenten hinsichtlich ihrer Dicke unterscheiden, um unterschiedlich große Presskräfte bzw. Presskraftanteile übertragen zu können und dadurch eine geeignet dicke Komponente für die maximale erforderliche Presskraft oder den maximal erforderlichen Presskraftanteil wählen zu können. Insbesondere bei Verwendung von Festanschlageinrichtungen mit einer einheitlichen geringen Gesamthöhe oder wenigen unterschiedlichen Höheneinstellbereichen ist der Einsatz der Stützeinrichtungen vorteilhaft, wenn eine große Vielzahl von Stützeinrichtungen mit unterschiedlicher Höhe bzw. Erstreckung längs der Pressachse bereitgestellt wird. Dadurch kann eine Reduzierung eines erforderlichen justierenden Hubs der verstellbaren Festanschläge auf ein Minimum reduziert werden, wenn eine Haupthöhenerstreckung längs der Pressachse durch eine derartige als starre Komponente ausgebildete Stützeinrichtung zwischen zwei solche Festanschlageinrichtungen gesetzt werden kann.

Auch können sich die Komponenten des Moduls hinsichtlich vorteilhaft einsetzbarer Dimensionen und Anordnungen von in diesen ausgebildeten Öffnungen oder Durchgangsöffnungen zur Bereitstellung beispielsweise eines Stempelträger-Aufnahmeraums oder von Befestigungs- und Führungsöffnungen zum Hindurchführen anderer Komponenten wie Koppelstangen, Spindeln, Spindelmuttern welche zu Stempelträgern führen oder Stempelträgern, unterscheiden.

Eigenständig vorteilhaft ist demgemäß außerdem ein Verfahren zum Zusammensetzen eines solchen Keramikpulver- und/der Metallpulver-Pressenwerkzeugs oder einer solchen Keramikpulver- und/oder Metallpulver-Presse, bei dem die Festanschlagseinrichtung, welche den der Stempel und dessen Stempelträger mit der in Pressendstellung darüber in Relation zu den übrigen Stempeln höchsten wirkenden Kraft abstützt, als starrer oder starr wirkender Festanschlagskörper ausgewählt wird und bei dem zumindest eine andere der Festanschlagseinrichtungen als höhenverstellbare Festanschlagseinrichtung ausgewählt wird.

Bevorzugt wird ein solches Verfahren, bei dem die Festanschlagseinrichtungen derart angeordnet werden, dass die Presskraft eines Pressantriebs in der Pressendstellung über den Grundkörper, insbesondere über zwischen den Festanschlagseinrichtungen eingesetzten Stützeinrichtungen und über die Festanschlagseinrichtungen zu den Stempeln und dabei vollständig um zumindest einen Teil der Stempelträger herum geleitet wird. Bei einer solchen Verfahrensweise erfolgt die Anordnung und entsprechend auch später gegebenenfalls die Steuerung von Antriebseinheiten somit so, dass die Verstellantriebe vollständig aus dem Kraftweg ausgekoppelt werden. Beispielsweise können dazu die elektrischen Antriebe von den Spindelantrieben abgekoppelt werden oder kraftfrei geschaltet werden.

Vorteilhaft ist ein solches Verfahren, bei dem die Festanschlagseinrichtung, welche den der Stempel und dessen Stempelträger mit der in Pressendstellung darüber in Relation zu den übrigen Stempeln höchsten einwirkenden Kraft abstützt, als höhenverstellbare Festanschlagseinrichtung mit einem kraftübertragenden verstellbaren Element und einem kraftübertragenden Gegenelement eingesetzt wird, bei welcher das verstellbare Element einen Festanschlag-Anschlag aufweist, wobei der Festanschlag-Anschlag gegen einen Festanschlag-Gegenanschlag des kraftübertragenden Gegenelements verstellt wird und bei dem zumindest eine andere der Festanschlagseinrichtungen als höhenverstellbare Festanschlagseinrichtung ausgebildet wird.

Eigenständig vorteilhaft ist demgemäß auch ein Verfahren zum Betreiben einer solchen Keramikpulver- und/oder Metallpulver-Presse, bei dem jeweils einen der Stempelträger gemeinsam verstellende der Verstellantriebe den Stempelträger synchron verstellend angesteuert werden. Insbesondere kann neben einer einwirkenden Kraft oder einer Neigung des Stempelträgers eine Verstellhöhe des Stempelträgers als Kriterium für die Ansteuerung verwendet werden.

Eigenständig vorteilhaft bei einem solchen Werkzeug ist auch ein Verfahren zum Zusammensetzen eines solchen Keramikpulver- und/oder Metallpulver-Pressenwerkzeugs oder einer solchen Keramikpulver- und/oder Metallpulver-Presse, bei dem die Stempelträger erst nach oder beim Einsetzen des Werkzeugs in die Presse mit den in der Presse bereits zuvor angeordneten Verstellantrieben gekoppelt werden.

Bei einem solchen modularen Aufbau werden die einzelnen Werkzeugkomponenten, insbesondere die Stempelträger erst während des Werkzeugeinbaus in die Presse mit den Antrieben verbunden. Dadurch kann eine günstige Auswahl der Längendimensionen gewählt werden, was eine tatsächlich benötigte Hubhöhe und keine übermäßig hohe Anordnung erforderlich macht. Das Werkzeug muss auch nicht mit komplexen Antriebseinrichtungen belastet werden, welche standardgemäß bei einer Vielzahl verschiedenartigster Zusammenstellungen des Werkzeugs für verschiedenartige Pressstempel stets gleichbleibend bereitgestellt werden können. Dadurch kann in der Presse bereits eine Ankoppelmöglichkeit für die zu verstellenden Komponenten des Werkzeugs an die in der Presse unabhängig davon bereitgestellten Antriebseinheiten ermöglicht werden.

Bereitgestellt wird somit eine Presse mit einem Pressenwerkzeug bzw. auch eigenständig nur ein Pressenwerkzeug zum Pressen von Pressteilen aus Keramikpulver und/oder Metallpulver bzw. aus entsprechenden Granulaten oder Gemischen aus feinkörnigen und granularen Pulvern. Durch den modularen Aufbau wird insbesondere ein kürzestmöglicher Aufbau des Adapters bzw. des Werkzeugs erreicht. Dadurch ergeben sich vorteilhaft geringe Verformungen des Werkzeugs im Fall von z. B. Füllhöhenschwankungen des in die Matrizenöffnung eingefüllten Pulvers. Letztendlich können dadurch wiederum genauere Pressteile auch im Fall von Füllhöhenschwankungen gepresst werden. Durch die genauere Pressung entsteht wiederum eine reduzierte Rissbildung in den Pressteilen und somit ein geringerer Anteil an Ausschuss während des Pressverfahrens.

Insbesondere auch die Stempelträger können in vielfältiger Weise bereitgestellt werden. Neben verschiedenen Dicken in Richtung der Pressachse zur Aufnahme unterschiedlich hoher Presskraftanteile kann die Anzahl der von einem zentralen Abschnitt wegführenden Stege auch höher als zwei gewählt werden, um an einen Stempelträger auch mehr als zwei Verstellantriebe ankoppeln zu können. Außerdem können Anschraubdurchmesser zum Anschrauben der Stempel oder von Stempelbefestigungskomponenten bei Zwischenschaltung weiterer Elemente auch solcher zwischengeschalteter Komponenten auf den tatsächlichen Bedarf mit Blick auf zu übertragende Presskraftanteile dimensioniert bereitgestellt werden. Die modulare Anordnung ermöglicht außerdem eine freie Zuordnung der einzelnen Verstellantriebe zu den verschiedenen verstellbaren Ebenen bzw. Stempelträgern. Auch eine individuelle Festlegung der Wege von den Verstellantrieben zu den einzelnen Stempelträgern ist möglich. Ermöglicht wird weiterhin durch den modularen Aufbau eine freie Zuordnung zu dem jeweiligen Festanschlag mit einem individuell vorgebbaren oder aus einem modularen Satz auswählbaren Anschlussdurchmesser. Insbesondere die Zuordnung einer Anzahl von Verstellantrieben zu den verschiedenen Ebenen bzw. Stempelträgern ist frei wählbar, wobei gegebenenfalls auch nur ein einzelner Verstellantrieb für einen einzelnen Stempelträger einsetzbar ist, wie dies oftmals für den so genannten Mittenstift oder zentralen Stempel gewünscht wird. Bei einem solchen modular aufgebauten Pressenwerkzeug mit mehreren Ebenen ist eine Abstimmung jeder Ebene auf den individuellen Werkzeugdurchmesser, eine Abstimmung jeder Ebene auf die individuell auftretende Kraft und eine Abstimmung jeder Ebene auf die individuell auftretenden zurückzulegenden Wege verstellbarer Komponenten möglich. Das Pressenwerkzeug kann außerhalb der Presse montiert werden, wobei vorteilhaft Antriebseinrichtungen nicht bereits mitzumontieren sind, was das eigentliche Presswerkzeug baulich und hinsichtlich seines Gewichts klein hält.

Durchmesser von Anschraubflächen für Stempel oder Stempelbefestigungselemente auf den einzelnen Stempelträger können individuell auf die Stempel angepasst werden. Dadurch können die Durchmesser der Anschraubflächen kleiner ausgeführt werden, wobei ein Durchmesser der Anschraubfläche auf einem Stempelträger durch den Durchmesser der Anschraubfläche auf dem darunter liegenden Stempelträger beeinflusst wird. Da die Anschraubflächen aber insgesamt kleiner als bei starren Anordnungen sind, ergibt sich eine kleinere Anschraubfläche für den obersten bzw. äußersten Stempel.

Es kann stets die Ebene mit der höchsten Presskraft einem nichtverstellbaren Festanschlag zugeordnet werden, wobei dies abhängig von der individuellen Pressteilkontur individuell bei der Zusammenstellung des Werkzeugs festlegbar ist. Die übrigen verstellbaren Festanschläge müssen dadurch effektiv nur geringe Kräfte übertragen und entsprechend auch nur geringere Flächen bereitstellen, über welche Kräfte zu übertragen sind, so dass letztendlich der Durchmesser auch der Festanschläge klein gewählt werden kann. Durch den allgemein geringeren Durchmesser der Komponente können die Verstellantriebe zueinander enger angeordnet werden, wodurch die einzelnen Stempelträger sich in der Ebene quer zur Pressachse geringer weit erstreckend ausgebildet werden können und somit aufgrund einer geringeren Durchbiegung auch selber dünner in Richtung der Pressachse ausgebildet werden können.

Die Verstellantriebe werden erst beim Einbau des Werkzeugs mit den Komponenten des Werkzeugs verbunden, wobei sich zwar Hübe der verschiedenen Ebenen addieren und so eine minimale Bauhöhe vorgeben, wobei jedoch eine Bauhöhe insgesamt günstig gering gehalten werden kann, da nur die erforderlichen Hubstrecken eines ganz bestimmten Pressteils berücksichtigt werden müssen. Dieses ist auch Abstimmbar durch Bereitstellung und Verwendung unterschiedlich langer Koppelstangen, Spindeln und sonstige Komponenten der Strecke vom Verstellantrieb bis zum Stempelträger.

Ein Ausführungsbeispiel wird nachfolgend anhand der Zeichnung näher erläutert. Für gleiche oder gleich wirkende Komponenten oder Verfahrensschritte werden in den Figuren gleiche Bezugszeichen verwendet. Im Fälle von modifizierten Ausgestaltungen werden modifizierte Komponenten auch mit zusätzlichen Kennzeichnungen der Bezugszeichen gezeichnet. Entsprechend gelten Beschreibungen für eine der Figuren auch für die übrigen Figuren, welche entsprechende Komponenten darstellen. Es zeigen:
- Fig. 1: eine Seitenansicht einer Keramikpulver- und/oder Metallpulver-Presse mit einem darin eingesetzten zweiteiligen Pressenwerkzeug gemäß einer bevorzugten Ausführungsform;
- Fig. 2: eine teilweise geschnittene Ansicht eines solchen Pressenwerkzeugs;
- Fig. 3: eine Schnittansicht eines demgegenüber teilweise modifizierten Werkzeugs;
- Fig. 4: schematisch eine Skizzierung von Flächenverhältnissen einer bevorzugten Ausgestaltung; und
- Fig. 5: eine Skizzierung von erforderlichen Flächenverhältnissen von Werkzeugkomponenten gemäß dem Stand der Technik.

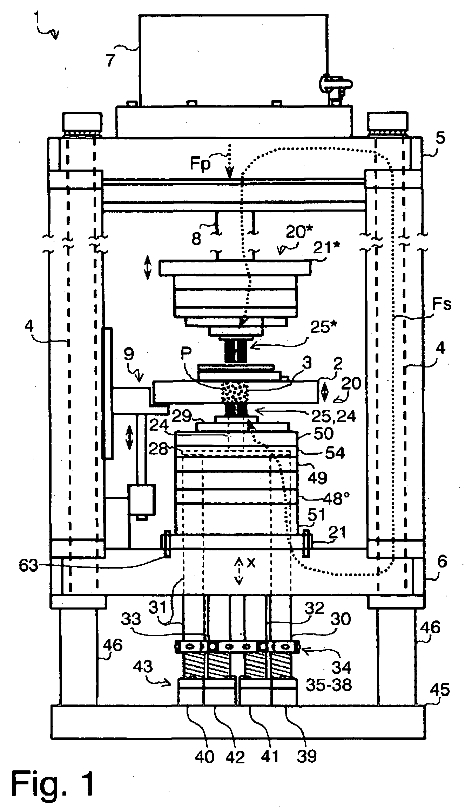

Wie aus Fig. 1 zeigt eine Seitenansicht einer Keramikpulver- und/oder Metallpulver-Presse 1, in welcher ein beispielhaft zweiteiliges Keramikpulver- und/oder Metallpulver-Pressenwerkzeug 20, 20* eingesetzt ist. Bevorzugt ausgestaltet ist insbesondere das untere Pressenwerkzeug 20.

In der Presse 1 ist eine Matrize 2 angeordnet, welche eine Matrizenöffnung 3 aufweist. Die Matrizenöffnung 3 dient zum Einfüllen eines Pulvers P, insbesondere Keramikpulvers und/oder Metallpulvers. Unter einem Pulver P ist dabei im weiteren Sinne auch ein Granulat oder ein Gemisch aus feinkörnigem Pulver und granularem Material zu verstehen. Mit Hilfe von Stempeln 24, 25, welche von unten in die Matrizenöffnung 3 eingeführt sind und während eines Verpressens weiter in diese eingeführt werden, und Stempeln 25*, welche von der gegenüberliegenden Seite nach dem Befüllen der Matrizenöffnung 3 in die Matrizenöffnung 3 eingeführt werden, wird das Pulver P zu einem Pressteil verpresst. Nach einem Ausstoßen des Pressteils aus der Matrizenöffnung 3 wird diese erneut mit Pulver P gefüllt, um ein weiteres Pressteil zu pressen.

In für sich bekannter Art und Weise weist die Presse 1 einen Pressenrahmen auf, welcher aus zwei seitlichen Pressenrahmen 4 besteht, welche oberseitig und unterseitig fest mit einem oberseitigen bzw. einem unterseitigen Pressenrahmen 6, 5 verbunden sind. Die Pressenrahmen 4 - 6 sind dabei fest miteinander verspannt, um einen Kraftfluss durch diese hindurch bis zu den Stempeln 24, 25, 25* aufbauen zu können. Zum Aufbauen bzw. Anlegen einer Presskraft Fp weist die Presse 1 einen Pressantrieb 7 auf, welcher beispielsweise oberseitig des Pressenrahmens 5 angeordnet ist. Über einen Pressantriebskolben 8 wird von dem Pressantrieb 7 die Presskraft Fp auf das obere Pressenwerkzeug 20* aufgebracht, so dass dieses in Richtung der Matrize 2 verstellt wird. Durch die einwirkende Presskraft Fp werden die einzelnen Komponenten der Pressenwerkzeuge 20, 20* zusammengefahren und gegen den unterseitigen Pressenrahmen 5 gespannt. Dabei pressen die Stempel 24, 25, 25* das Pulver P zu dem Pressteil.

Um die Matrize 2 zusammen mit den übrigen Komponenten in Richtung des unterseitigen Pressrahmens 5 verstellen zu können, weist die Presse 1 eine Matrizen-Verstelleinrichtung 9 auf, welche an dem seitlichen Pressenrahmen 4 befestigt ist und eine Höhenverstellung der Matrize 2 ermöglicht. Die Höhenverstellung der Matrize 2 wird dabei auf die relative Bewegung der Stempel 24, 25, 25* abgestimmt. Vorzugsweise wird in der Matrizen-Verstelleinrichtung 9 ein Elektromotor mit einem Spindelantrieb eingesetzt, wobei jedoch auch beliebige andere Antriebssysteme einsetzbar sind.

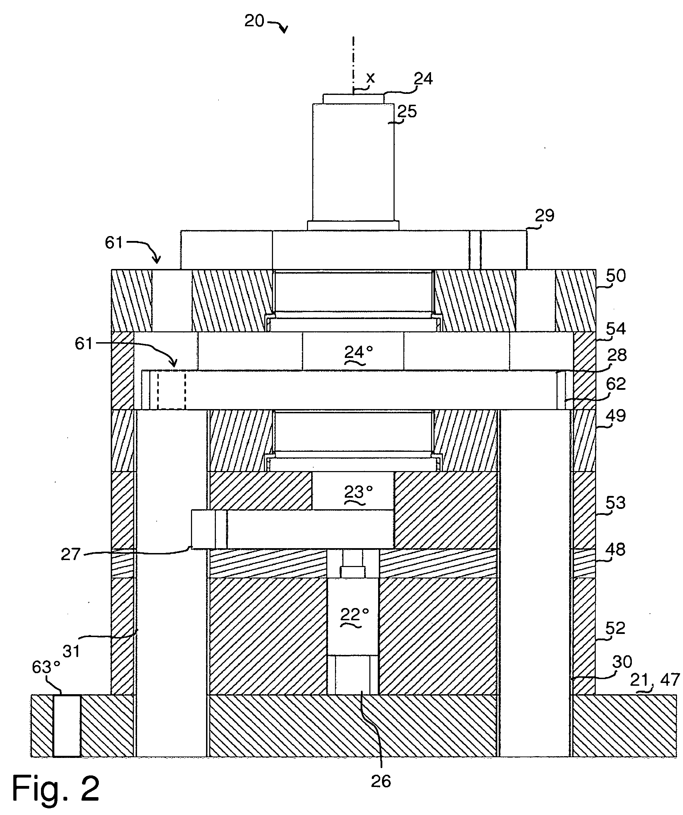

Wie aus Fig. 1 und insbesondere Fig. 2 ersichtlich ist, besteht ein bevorzugtes Werkzeug 20 aus einer Vielzahl von einzelnen Komponenten. Das diesem gegenüberliegende oberseitige Werkzeug 21* kann prinzipiell einen vergleichbaren Aufbau aufweisen, kann aber auch in herkömmlicher Art und Weise oder einer Mischform aus herkömmlicher Bauweise und der Bauweise und des unterseitigen Werkzeugs 20 aufgebaut sein. Selbiges gilt für Verstellanordnungen zum Verstellen der einzigen einzelnen Komponenten des oberseitigen Werkzeugs 21*.

Das Pressenwerkzeug 20 ist aus Komponenten eines modularen Systems zusammengestellt und ermöglicht eine einfache Anpassung an jeweils zu pressende Pressteile, wobei durch die modulare Ausgestaltung ein geringer Raumbedarf in insbesondere Pressrichtung aber auch in einer Ebene quer zur Pressrichtung ermöglicht wird.

Unterseitig weist das unterseitige Pressenwerkzeug 20 einen Grundkörper 21 auf, welcher bei dem oberseitigen Pressenwerkzeug 20* einem Grundkörper 21* entspricht. Die Grundkörper 21, 21* weisen vorzugsweise Durchtrittsöffnungen oder sonstige Ausgestaltungen auf, welche eine lösbare aber feste Befestigung der Grundkörper 21, 21* an Aufnahme- oder Befestigungseinrichtungen der Presse 1 ermöglichen. Beispielhaft ist dabei der oberseitige Grundkörper 21* fest an den Pressantriebskolben 8 angekoppelt und der unterseitige Grundkörper 21 fest an den unterseitigen Pressenrahmen 5 angekoppelt.

Die Stempel 22 - 25 sind jeweils auf Stempelträgern 26 - 29 aufgesetzt. Dazu weisen die Stempelträger 26 - 29 Aufsatz- und Befestigungsflächen auf, welche bei der besonders bevorzugten Ausgestaltung kreisförmig ausgebildet sind. Zentral weisen die Aufsatzflächen jeweils eine Durchtrittsöffnung auf, um Stempel oder zu den Stempeln führende Befestigungselemente von weiter innen liegenden der Stempel 22 - 24 hindurchführen zu können. Die Anordnung ist dabei bevorzugt rotationssymmetrisch um eine Pressachse x angeordnet, längs derer eine Verstellrichtung bzw. Pressrichtung der Stempel 22 - 25, 25* erfolgt. Seitlich von den Aufsatz- und Befestigungsflächen für die Stempel 22 - 25 ragen Stege von den Aufsatz- und Befestigungsflächen weg, welche vorzugsweise länglich ausgebildet sind. Dargestellt ist beispielhaft eine Anordnung mit einem langen stegförmigen Stempelträger 26 - 29, welcher mittig den Aufsatzbereich und Befestigungsbereich für die Stempel 22 - 25 aufweist. Jedoch sind auch andere Ausgestaltungen umsetzbar, insbesondere Ausgestaltungen mit mehr als zwei seitlich abstehenden Stegelementen, welche dann eine Sternform annehmen. Auch elliptische Ausgestaltungen sind umsetzbar, wenn auch aufgrund des höheren Materialbedarfs und aufgrund des höheren Raumbedarfs innerhalb der Anordnung des Pressenwerkzeugs weniger bevorzugt.

Die stegförmigen Elemente der Stempelträger 26 - 29 sind außen- und unterseitig an Koppelstangen 30 - 33 befestigt, welche durch die unterseitigen Komponenten des Pressenwerkzeugs 20 und durch den Grundkörper 21 hindurchgeführt sind.

Die Koppelstangen 30 - 33 führen weiter durch entsprechende Öffnungen bzw. Bohrungen, welche durch den unterseitigen Pressenrahmen 5 hindurchführen bis zu Spindeln 35 - 38 einer Vielzahl von Verstellantrieben 39 - 42. Prinzipiell können aber auch Spindeln oder Spindelmuttern der Verstellantriebe direkt bis zu den Stempelträgern geführt und daran befestigt sein.

Bei den Verstellantrieben 39 - 42 handelt es sich insbesondere um Elektromotor- Spindelantriebe, welche eine sehr gut kontrollierte Ansteuerung der Verstellbewegungen ermöglichen.

Eine Befestigung der Koppelstangen 30 - 33 an den Stirnseiten der Spindeln 35 - 38 erfolgt vorzugsweise über Spannelemente als beispielhaften Koppeleinrichtungen 34. Prinzipiell ist aber auch eine Verspannung möglich, bei welcher von einer Oberseite her ein Schraubbolzen oder eine Befestigungsschraube durch entsprechende Öffnungen in den Stempelträgern 26 - 29 und weiter durch als Hohlstangen ausgebildete Koppelstangen 30 - 33 geführt werden, um in eine stirnseitige Gewindeöffnung der Spindeln 35 - 38 eingeschraubt zu werden.

Bei der bevorzugten Anordnung ist dabei jeder einzelnen Koppelstange 30 - 33 eine eigene Spindel 35 - 38 und ein eigener Verstellantrieb 39 - 42 zugeordnet, so dass jede der Koppelstangen 30 - 33 individuell angesteuert bzw. geregelt werden kann. Als Regelgröße können beispielsweise Messwerte eines Höhenverstellsystems, jedoch auch beliebige andere Messwerte andersartiger Messsysteme verwendet werden. Zur Regelung weist die Presse 1 vorzugsweise eine eigene Steuereinrichtung auf.

Im Vergleich zu hydraulischen Verstellantrieben ermöglicht eine elektromotorische Verstellung der Stempelträger 26 - 29 mittels jeweils zumindest zwei eigenständigen Verstellantrieben 29, 40; 41, 42 pro Stempelträger 28; 29 eine sehr genaue Verstellbewegung, so dass bei geeigneten Ausgestaltungen prinzipiell sogar ein loses Aufsetzen der Stempelträger 26 - 29 auf die entsprechenden Koppelstangen 30 - 33 möglich wäre. Die Befestigung dient somit in erster Linie dazu, eine Rückstellbewegung zu ermöglichen. Im Gegensatz zu hydraulischen Antrieben mit insbesondere Druckausgleich zwischen miteinander verbundenen Kolbensystemen für die jeweils einem Stempelträger zugeordneten hydraulischen Kolben kann bei einer elektromotorischen Ansteuerung über insbesondere ein Spindelgetriebe ein Zerbrechen der Verbindung zwischen den Kolbenstangen 30 - 33 und den Stempelträgern 26 - 29 vermieden werden.

Wie Fig. 1 entnehmbar ist, ist insbesondere auch eine vorteilhafte Ausgestaltung möglich, bei welcher die Verstellantriebe 39 - 42 außerhalb einer Kraftstrecke Fs angeordnet werden können, wobei die Kraftstrecke Fs sich von den Stempeln 24, 25; 25* über die Pressenwerkzeuge 20; 20* und die Pressenrahmen 4 - 6 erstreckt. Dies ist möglich, da die Koppelstangen 30 - 33 durch den unterseitigen Pressenrahmen 5 hindurchführbar sind, so dass die Verstellantriebe 39 - 42 in einem Raum unterseitig des eigentlichen Pressenrahmens 4 - 6 angeordnet werden können. Beispielhaft ist der unterseitige Pressenrahmen 5 dabei auf Rahmenstützen 46 abgestützt, welche auf einem unterseitigen Sockel 45 aufgesetzt und vorzugsweise befestigt sind. Der unterseitige Sockel 45 dient zugleich als Aufsatz oder Aufnahme für die Komponenten der Verstellantriebe 39 - 42. Durch das Auslagern der Verstellantriebe 39 - 42 aus der Kraftstrecke Fs, insbesondere das Auslagern aus dem Grundkörper 21 und/oder dem unterseitigen Pressenrahmen 5 wird die weitere Modularisierung des Pressenkonzeptes weiter gefördert. Die Anordnung der einzelnen Verstellantriebe 39 - 42 bzw. von deren Komponenten ist variabel möglich und benötigt zudem relativ wenig Bauraum. Insbesondere können der unterseitige Pressenrahmen 5 und der Grundkörper 21 in sowohl Pressrichtung als auch in der Ebene quer zur Pressrichtung auf ein Baumaß reduziert gehalten werden, welches für die Übertragung der Presskraft Fp im Fall der konkret zu pressenden Pressteile gerade erforderlich ist.

Insbesondere Fig. 2 zeigt einen bevorzugten Aufbau eines unterseitigen Werkzeugs 20, bei welchem gemäß der bevorzugten Ausgestaltung als modularer Bausatz eine kompakte Anordnung aus Festanschlageinrichtungen 47 - 50 und Stützeinrichtungen 51 - 54 entnehmbar ist, welche zumindest einen Teil der Stempelträger 26 - 29 und Koppelstangen 30 - 33 aufnehmen und teilweise führen. Durch den modularen Aufbau und insbesondere die Ausgestaltung mit den vorzugsweise stegförmigen Stempelträgern 26 - 29 auf den durch Elektromotoren verstellbaren Koppelstangen 30 - 33 ist eine Anpassung der jeweiligen Dimensionen, das heißt Höhen in Richtung der Pressachse x und vorzugsweise auch in Richtung eines Umfangs in der Ebene senkrecht zur Pressachse x auf das jeweils zu pressende Pressteil optimierbar.

Der dargestellte Grundkörper 21 kann zugleich einen starren Festanschlag 47 für den untersten Stempelträger 26 ausbilden. Üblicherweise wird der unterste Stempelträger 26 mit einem Mittenstift jedoch nicht bis gegen einen Festanschlag gefahren. Der Stempelträger 26 trägt einen Mittenstift oder einen inneren und einen Mittenstift umgebenden Stempel 22.

Der Stempel 22 kann dabei direkt auf dem ersten Stempelträger 26 befestigt sein, kann jedoch auch, wie skizziert, an einem Stempelbefestigungselement 22° befestigt sein, welches von dem Stempelträger 26 in Richtung der Matrizenöffnung absteht oder daran befestigt ist.

Ein zweiter der Stempelträger 27, welcher über ein Stempelbefestigungselement 23° einen zweiten der Stempel 23 trägt, ist in einer höheren Ebene angeordnet und auf einer Festanschlageinrichtung 48 abgestützt. Die Festanschlageinrichtung 48 ist als starre bzw. nicht höhenverstellbare Festanschlageinrichtung ausgebildet. Die Festanschlageinrichtung 48 ist auf einer Stützeinrichtung 52 abgestützt, welche zwischen die Festanschlageinrichtung 48 und den Grundkörper 21 gesetzt ist.

Diese Festanschlageinrichtung 48 und diese Stützeinrichtung 52 weisen, wie auch alle übrigen Festanschlageinrichtungen 47 - 50 und alle übrigen Stützeinrichtung 51 - 54 eine Vielzahl von Befestigungs- und Führungsöffnungen 61 auf, welche zum Durchführen von den Koppelstangen 30 - 33 und Stempeln 22 - 25 bzw. Stempelbefestigungselementen 22°, 23° sowie zum Aufnehmen der Stempelträger 26 - 28 ausreichend groß dimensioniert sind.

Nach unten hin ist der Stempelträger 26, wie auch die übrigen Stempelträger, über nicht dargestellte Koppelstangen mit eigenen Verstellantrieben verbunden, welche zur Vereinfachung ebenfalls nicht dargestellt sind.

Auf dem zweiten Stempelträger 48 sitzt eine dritte Stützeinrichtung 53, welche wiederum eine dritte Festanschlageinrichtung 49 trägt. Die dritte Festanschlageinrichtung 49 dient zum Abstützen des dritten Stempelträgers 28, welcher den dritten Stempel 24 bzw. ein zwischen den dritten Stempel 24 und den dritten Stempelträger 28 gesetztes Stempelbefestigungselement 24° trägt.

Auf der dritten Festanschlageinrichtung 49 ist eine vierte Stützeinrichtung 54 angeordnet, welche einen Stempelträger-Aufnahmeraum 62 aufweist. Der beispielhaft dargestellte Stempelträger-Aufnahmeraum 62 ist dabei so groß, dass er in Richtung der Pressachse x eine ausreichende Verstellbewegung des dritten Stempelträgers 28 ermöglicht. Durch den kompakten Aufbau und die optimierbare Abstimmung der einzelnen Komponenten auf das konkret zu pressende Pressteil kann dabei in Richtung der Pressachse x gegebenenfalls ein sehr geringer Verstellweg von wenigen Millimetern, beispielsweise 2 mm ausreichen. Auch in der Ebene senkrecht zur Pressachse x ist der Stempelträger-Aufnahmeraum 62 vorzugsweise nur geringfügig größer als die Außenkontur des davon aufgenommenen Stempelträgers 28, so dass die Stützeinrichtung 54 ein möglichst voll-volumiger Körper ist und entsprechend eine sehr hohe Presskraft Fp von der darüber angeordneten vierten Festanschlageinrichtung 50 auf darunter liegende Festanschlageinrichtungen 48, 49 und Stützeinrichtungen 52, 53 zu dem Grundkörper 21 hin übertragen kann.

Bei dem dargestellten Ausführungsbeispiel sind die beiden oberen der Festanschlageinrichtungen 49, 50 als höhenverstellbare Festanschläge ausgebildet. Dadurch wird eine Feinabstimmung einer Festanschlagshöhe in Richtung der Pressachse x für die jeweils aufsitzenden Stempelträger 28, 29 bzw. den darauf aufsitzenden Stempeln 24; 25 ermöglicht.

Prinzipiell ist eine wahlfreie Anordnung von höhenverstellbaren und nicht-höhenverstellbaren Festanschlageinrichtungen 47 - 50 bei einem derart aufgebauten modularen Konzept umsetzbar. Dadurch kann insbesondere dem Stempel 23, auf den der höchste Kraftanteil der einwirkenden Presskraft Fp einwirkt, von einem nicht-höhenverstellbaren Festanschlag 48 unterstützt werden, um eine Hauptpresskraft aufnehmen zu können.

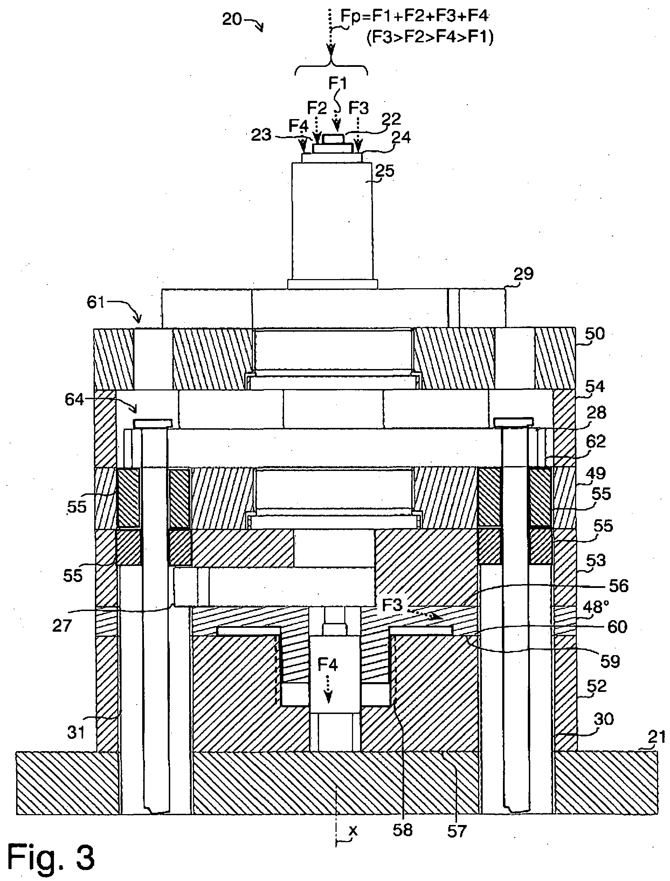

Gegenüber diesem Ausführungsbeispiel ist eine Vielzahl an Modifikationen umsetzbar. Fig. 3 zeigt beispielhafte Modifikationen, wobei nachfolgend lediglich gegenüber der Ausgestaltung von Fig. 2 abweichende Komponenten beschrieben werden.

Idealerweise kann durch eine insbesondere elektromotorische Verstellung der Kolbenstangen 30 - 33 eine derart genaue Ansteuerung und Verstellung der Stempelträger 26 - 29 vorgenommen werden, dass Führungshilfen für das Werkzeug 20 nicht erforderlich erscheinen. Vorzugsweise werden jedoch in einer oder mehreren der Komponenten Lager 55 angeordnet, wie beispielsweise bei dem dargestellten Ausführungsbeispiel Lager 55 in einer der Stützeinrichtungen 53 und einer der Festanschlageinrichtungen 49. Durch diese Lager 55 werden die Koppelstangen 30, 31 in solchen Stützeinrichtungen 53 und Lagereinrichtungen 49 geführt, was zu einem stabileren Aufbau des gesamten Werkzeugs 20 und von dessen starr angeordneten und beweglich angeordneten Komponenten relativ zueinander verbessert.

Bei dieser beispielhaften Ausgestaltung sind vorzugsweise alle der Festanschlageinrichtungen 48°, 49, 50 als höhenverstellbare Festanschlageinrichtungen ausgebildet. Um den zweiten Stempel 22 auf dem zweiten Stempelträger 27 trotzdem über einen starren Festanschlag abstützen zu können und auch einen sehr hohen einwirkenden Presskraftanteil F3 übertragen zu können, wird diese Festanschlageinrichtung 48° in ihre niedrigste Höhenposition gefahren. Dazu wird ein oberes verstellbares Element 56 des Festanschlags, welches einen Festanschlag-Anschlag 59 aufweist, so weit eingefahren, dass der Festanschlag-Anschlag 59 an einem Festanschlag-Gegenanschlag 60 des unteren Elements bzw. Gegenelements 57 des Festanschlags anliegt. Dadurch wird zugleich ein Festanschlaggewinde 58 zwischen dem verstellbaren und kraftübertragenden Element 56 des Festanschlags einerseits und andererseits dem verstellbaren und kraftübertragenden Gegenelement 57 möglichst weitgehend von zu übertragenden Kräften entlastet, um eine Zerstörung oder Schädigung des Gewindes zu vermeiden.

Ermöglicht wird somit auf Basis des modularen Aufbaus insbesondere auch eine wahlweise Zuordnung eines oder gegebenenfalls auch mehrerer Festanschläge derart, dass diese Stempeln zugeordnet sind, welche einen auf diese einwirkenden Presskraftanteil F1 - F4 als größtem dieser Presskraftanteile F3 übertragen müssen.

Letztendlich zeigt Fig. 3 beispielhaft auch eine Befestigungsschraube 64, welche zur Befestigung eines beispielhaften der Stempelträger 28 durch dessen Koppelstange 31 hindurch an der diesen zugeordneten Spindel dient.

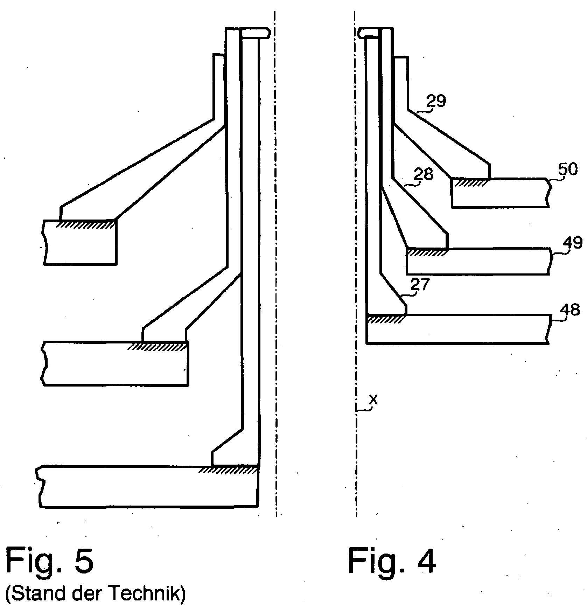

Fig. 4 zeigt beispielhaft anhand einer schematischen Skizze, dass durch ein derart modulares System die einzelnen Komponenten des Werkzeugs 20 möglichst optimal zu einem zu pressenden Pressteil ausgewählt werden können, wodurch jeweils möglichst geringe Erstreckungen in Richtung der Pressachse x und auch möglichst geringe Erstreckungen in der Ebene quer zu der Pressachse x für jedes einzelne der Bauteile gewählt werden können. Insgesamt führt dies zu einem sehr vorteilhaften Raumbedarf für das Werkzeug 20 mit einer erheblich geringeren Bauhöhe gegenüber herkömmlichen Werkzeugen ohne einen derartigen modularen Aufbau.

Im Vergleich zu Fig. 4 zeigt Fig. 5 eine herkömmliche Anordnung gemäß dem Stand der Technik, welche ohne einen modularen Aufbau für eine Dicke der einzelnen Stempelträger und entsprechend auch weiterer Komponenten deutlich mehr Raum benötigt und auch Kraftübertragungsflächen von einem Verhältnis deutlich größer als bei dem modularen Konzept gemäß Fig. 4 erforderlich macht. Um auf die Stempel einwirkende Kräfte nach außen zu leiten, werden insbesondere Flächenverhältnisse von gemäß erster Betrachtungen vergleichsweise zum modularen Aufbau z.B. dreifach größerem Auflageflächenbedarf benötigt.

### Bezugszeichenliste:

1 Keramikpulver- und/oder Metallpulver-Presse
2 Matrize
3 Matrizenöffnung
4 seitlicher Pressenrahmen
5 unterseitiger Pressenrahmen
6 oberseitiger Pressenrahmen
7 Pressantrieb
8 Pressantriebskolben
9 Matrizen-Verstelleinrichtung
20,20* Keramikpulver- und/oder Metallpulver-Pressenwerkzeug
21,21* Grundkörper
22-25,25* Stempel
22°-24° Stempelbefestigungselement
25-29 Stempelträger
30-33 Koppelstangen
34 Koppeleinrichtungen
35-38 Spindeln
39-42 Verstellantriebe, insbesondere Elektromotor-Spindelantriebe
43 Spindelräder
45 Sockel
46 Rahmenstützen
47-50 Festanschlageinrichtungen
48° nicht verstellbare Festanschlageinrichtung
51-54 Stützeinrichtungen
55 Lager
56 verstellbares Element des Festanschlags
57 Gegenelement des Festanschlags
58 Festanschlaggewinde
59 Festanschlag-Anschlag
60 Festanschlag-Gegenanschlag
61 Befestigungs- und Führungsöffnungen
62 Stempelträger-Aufnahmeraum
63,63* Aufnahme- oder Befestigungseinrichtung für 20 an 6, 8
64 Befestigungsschraube
Fp Presskraft
Fs Kraftstrecke
P Keramikpulver und/oder Metallpulver
x Pressachse

## Patentansprüche

1. Keramikpulver- und/oder Metallpulver-Pressenwerkzeug mit
- zumindest einem Grundkörper (21; 21*),
- einer Vielzahl von zumindest zwei Stempeln (22 - 25; 25*), welche in einer Pressstellung von einer Seite aus in eine mit Keramik- und/oder Metallpulver (P) befüllte Matrizenöffnung (3) einer Matrize (2) eintauchbar angeordnet sind,
- einer Vielzahl von zumindest zwei Stempelträgern (26, 27, 28, 29), an welchen jeweils einer der Stempel (24, 25; 25*) angesetzt ist, wobei zumindest ein Teil der Stempelträger (28; 29) an jeweils zumindest zwei Verstellantrieben (39, 40; 41, 42) ankoppelbar ist und wobei die Stempelträger (26 - 29) relativ zueinander und relativ zu dem Grundkörper (21) verstellbar angeordnet sind, und
- Festanschlagseinrichtungen (47, 48, 49, 50; 48°), welche angeordnet sind, eine Presskraft (Fp) zumindest teilweise in einer Pressendstellung von den Stempeln (22 - 25) über den Grundkörper (21) abzuleiten,
**dadurch gekennzeichnet, dass**
- zumindest einer der Stempelträger (28; 29) an zumindest zwei von Koppelstangen (30, 31; 32, 33), Spindeln (35 - 38) und/oder Spindelmuttern angekoppelt oder befestigt ist, wobei jede solcher Koppelstangen (30, 31; 32, 33) an jeweils einen eigenen solchen Verstellantrieb (39, 40; 41, 42) koppelbar oder befestigbar ist und wobei jede solcher Spindeln (35 - 38) und/oder Spindelmuttern Bestandteil jeweils eines eigenen solchen Verstellantriebs ist.

2. Pressenwerkzeug nach Anspruch 1, wobei ein Teil der Festanschlageinrichtungen (49) oder dazwischen angeordneter Stützeinrichtungen (53) Lager (55) aufweisen, durch welche die Koppelstangen (30, 31) geführt sind.

3. Pressenwerkzeug nach Anspruch 1 oder 2, wobei
- die Festanschlagseinrichtung (48°), welche den der Stempel und dessen Stempelträger (27) mit der in Pressendstellung darüber in Relation zu den übrigen Stempeln (22, 24 - 25) höchsten einwirkenden Kraft (F3) abstützt, als höhenverstellbare Festanschlagseinrichtung (48°) mit einem kraftübertragenden verstellbaren Element (56) und einem kraftübertragenden Gegenelement (57) ausgebildet ist, bei welcher das verstellbare Element (56) einen Festanschlag-Anschlag (59) aufweist, wobei der Festanschlag-Anschlag (59) gegen einen Festanschlag-Gegenanschlag (60) des kraftübertragenden Gegenelements (57) verstellt ist und
- zumindest eine andere der Festanschlagseinrichtungen (26, 28, 29) als höhenverstellbare Festanschlagseinrichtung ausgebildet ist.

4. Pressenwerkzeug nach einem vorstehenden Anspruch, wobei zumindest eine der Festanschlagseinrichtungen und/oder zumindest eine zwischen den Festanschlagseinrichtungen (47 - 50) angeordnete Stützeinrichtung (54) einen Stempelträger-Aufnahmeraum (62) umschließt/umschließen oder aufweist/aufweisen, welcher eine freie Bewegung eines der im Aufnahmeraum (62) aufgenommenen Stempelträgers (28) in und entgegen einer Pressrichtung der Stempel (24) ermöglicht.

5. Pressenwerkzeug nach einem vorstehenden Anspruch, wobei die Stempelträger (26 - 29) eine längliche, stegförmige oder sternförmige Erstreckung aufweisen und dadurch ausgebildete Stege über Koppelstangen (30, 31) an den Verstellantrieben (39, 40) angekoppelt oder befestigt sind.

6. Pressenwerkzeug nach einem vorstehenden Anspruch mit einer Vielzahl von Verstellantrieben (39 - 42), wobei an zumindest einen der Stempelträger (26 - 29) zumindest zwei der Verstellantriebe (39, 40) angekoppelt sind und die Verstellantriebe (39 - 42) jeweils einen Elektromotor aufweisen und jeder der Elektromotoren eine eigene Regelung aufweist, wobei die Regelungen der einen gemeinsamen Stempelträger (28; 29) verstellenden Verstellantriebe (39, 40) aufeinander synchronisiert angesteuert sind.

7. Keramikpulver- und/oder Metallpulver-Presse mit
- zumindest einer Aufnahme- und/oder Befestigungseinrichtung (63), welche ausgestaltet ist zum Einsetzen eines Pressenwerkzeugs (20; 20*) nach einem vorstehenden Anspruch,
- einem Pressantrieb (7), dessen Presskraft (Fp) über die zumindest eine Aufnahme- und/oder Befestigungseinrichtung (63) einkoppelbar ist in den Grundkörper (21) und in einen dem Grundkörper (21) gegenüberliegenden weiteren Grundkörper (21*) dieses oder eines gegenüberliegenden Werkzeugs (20; 20*), und
- einer Vielzahl von Verstellantrieben (39 - 42), wobei an zumindest einen der Stempelträger (26 - 29) eines eingesetzten solchen Pressenwerkzeugs (20; 20*) zumindest zwei der Verstellantriebe (39, 40) angekoppelt sind.

8. Presse (1) nach Anspruch 7, bei der zumindest ein Teil der Verstellantriebe (39 - 42) räumlich außerhalb einer Kraftstrecke (Fs) angeordnet ist, wobei die Kraftstrecke (Fs) in Pressendstellung gebildet wird durch zumindest den oder die Grundkörper (21; 21*), die Festanschlagseinrichtungen (47 - 50) und die Stempel (22 - 24).

9. Presse (1) nach Anspruch 7 oder 8, bei der die Verstellantriebe (39 - 42) jeweils einen Elektromotor aufweisen und jeder der Elektromotoren eine eigene Regelung aufweist, wobei die Regelungen der einen gemeinsamen Stempelträger (28; 29) verstellenden Verstellantriebe (39, 40) aufeinander synchronisiert angesteuert sind.

10. Presse (1) nach einem der Ansprüche 7 bis 9, bei der die Matrize (2) in einem Pressenrahmen der Presse (1) mittels einer Matrizen-Verstelleinrichtung (9) parallel zur Verstellrichtung der Stempel (22 - 25; 25*) verstellbar gelagert ist.

11. Modulares System eines Keramikpulver- und/oder Metallpulver-Pressenwerkzeugs nach einem der Ansprüche 1 bis 6 oder modulares System einer Keramikpulver- und/oder Metallpulver-Presse nach einem der Ansprüche 7 bis 10, mit zumindest zwei frei nach Bedarf für ein zu pressendes Pressteil wählbaren Komponenten aus der Gruppe der
- Stützeinrichtungen,
- Festanschlageinrichtungen, optional einschließlich nicht höhenverstellbaren Festanschlägen,
- Koppelstangen und
- Stempelträger,
- wobei die zumindest zwei der Komponenten mit jeweils verschiedenen variabel verfügbaren Dimensionen bereitgestellt sind.

12. Verfahren zum Zusammensetzen eines Keramikpulver- und/oder Metallpulver-Pressenwerkzeugs nach einem der Ansprüche 1 bis 6 oder einer Keramikpulver- und/oder Metallpulver-Presse nach einem der Ansprüche 7 bis 10, bei dem
- die Festanschlagseinrichtung (47), welche den der Stempel (23) und dessen Stempelträger (27) mit der in Pressendstellung darüber in Relation zu den übrigen Stempeln (22, 24 - 25) höchsten wirkenden Kraft (F3) abstützt, als starrer oder starr wirkender Festanschlagskörper ausgewählt wird und
- zumindest eine andere der Festanschlagseinrichtungen (49, 50) als höhenverstellbare Festanschlagseinrichtung ausgewählt wird.

13. Verfahren nach Anspruch 12, bei dem die Festanschlagseinrichtungen (47 - 50) angeordnet werden, die Presskraft (Fp) eines Pressantriebs (7) in der Pressendstellung über den Grundkörper (21), insbesondere über zwischen den Festanschlagseinrichtungen (47 - 50) eingesetzten Stützeinrichtungen (51 - 54) und über die Festanschlagseinrichtungen (47 - 50) zu den Stempeln (22 - 25) und dabei vollständig um zumindest einen Teil der Stempelträger (26 - 29) herum zu leiten.

14. Verfahren nach Anspruch 12 oder 13, bei dem die Festanschlagseinrichtung (47°), welche den der Stempel (23) und dessen Stempelträger (27) mit der in Pressendstellung darüber in Relation zu den übrigen Stempeln (22, 24 - 25) höchsten einwirkenden Kraft (F3) abstützt, als höhenverstellbare Festanschlagseinrichtung (48°) mit einem kraftübertragenden verstellbaren Element (56) und einem kraftübertragenden Gegenelement (57) eingesetzt wird, bei welcher das verstellbare Element (56) einen Festanschlag-Anschlag (59) aufweist, wobei der Festanschlag-Anschlag (59) gegen einen Festanschlag-Gegenanschlag (60) des kraftübertragenden Gegenelements (57) verstellt wird und - zumindest eine andere der Festanschlagseinrichtungen (26, 28, 29) als höhenverstellbare Festanschlagseinrichtung ausgebildet ist.

15. Verfahren zum Betreiben einer Keramikpulver- und/oder Metallpulver-Presse nach einem der Ansprüche 7 bis 10, bei dem jeweils einen der Stempelträger (28; 29) gemeinsam verstellende der Verstellantriebe (39, 40; 41, 42) den Stempelträger (28; 29) synchron verstellend angesteuert werden.

16. Verfahren zum Zusammensetzen eines Keramikpulver- und/oder Metallpulver-Pressenwerkzeugs nach einem der Ansprüche 1 bis 6 oder einer Keramikpulver- und/oder Metallpulver-Presse nach einem der Ansprüche 7 bis 10, bei dem
- die Stempelträger (26 - 29) erst nach oder beim Einsetzen des Werkzeugs in die Presse (1) mit den in der Presse (1) bereits zuvor angeordneten Verstellantrieben (39 - 42) gekoppelt werden.

## Claims

1. A ceramic-powder and/or metal-powder press tool, comprising
- at least one base body (21; 21 *),
- a plurality of at least two punches (22 - 25; 25*) which, in a press position, are arranged to be insertable from one side into a die cavity (3) of a die (2) filled with ceramic and/or metal powder (P),
- a plurality of at least two punch carriers (26, 27, 28, 29) each for the attachment of one of the punches (24, 25; 25*), wherein at least part of the die carriers (28; 29) is couplable to each at least two adjustment drives (39, 40; 41, 42) and wherein the punch carriers (26 - 29) are arranged to be adjustable relative to each other and relative to the base body (21), and
- positive-stop devices (47, 48, 49, 50; 48°) arranged to divert, in a press end position, at least part of a pressing force (Fp) from the punches (22 - 25) via the base body (21),
**characterized in that**
- at least one of the punch carriers (28; 29) is coupled to or mounted on at least two out of coupling rods (30, 31; 32, 33), spindles (35 - 38) and/or spindle nuts, wherein each such coupling rod (30, 31; 32, 33) is couplable to or mountable on its own such adjustment drive (39, 40; 41, 42) and wherein each such spindle (35 - 38) and/or spindle nut is part of its own adjustment drive.

2. The press tool according to claim 1, wherein part of the positive-stop devices (49) or interposed support devices (53) comprise bearings (55), through which the coupling rods (30, 31) are passed.

3. The press tool according to claim 1 or 2, wherein
- the positive-stop device (48°) which supports that one of the punches and its punch carrier (27) via which the highest effective force (F3) acts in relation to the remaining punches (22, 24 - 25) in the press end position is formed as a height-adjustable positive-stop device (48°) comprising a force-transmitting adjustable element (56) and a force-transmitting counter-element (57), wherein the adjustable element (56) comprises a positive-stop stop (59), wherein the positive-stop stop (59) is adjusted against a positive-stop counter-stop (60) of the force-transmitting counter-element (57), and
- at least one other of the positive-stop devices (26, 28, 29) is formed as a height-adjustable positive-stop device.

4. The press tool according to any of the preceding claims, wherein at least one of the positive-stop devices and/or at least one support device (54) interposed between the positive-stop devices (47 - 50) surrounds/surround or comprises/comprise a punch carrier receiving space (62), which enables free movement of a punch carrier (28) received in the receiving space (62) in and against a pressing direction of the punches (24).

5. The press tool according to any of the preceding claims, wherein the punch carriers (26 - 29) have an elongate, bar-like or star-like extension, and bars formed thereby are coupled or mounted on the adjustment drives (39, 40) via coupling rods (30, 31).

6. The press tool according to any of the preceding claims, comprising a plurality of adjustment drives (39 - 42), wherein at least two of the adjustment drives (39, 40) are coupled to at least one of the punch carriers (26 - 29) and each of the adjustment drives (39 - 42) comprises an electric motor and each of the electric motors has its own control, wherein the control means of the adjustment drives (39, 40) adjusting a common punch carrier (28; 29) are driven in synchronism with each other.

7. A ceramic-powder and/or metal-powder press, comprising
- at least one receiving and/or mounting device (63), which is designed for the insertion of a press tool (20; 20*) according to any of the preceding claims,
- a press drive (7) having a pressing force (Fp) couplable via the at least one receiving and/or mounting device (63) into the base body (21) and into a further base body (21*), opposite the base body (21), of the present or an opposite tool (20; 20*), and
- a plurality of adjustment drives (39 - 42), wherein at least two of the adjustment drives (39, 40) are coupled to at least one of the punch carriers (26 - 29) of such an inserted press tool (20; 20*).

8. The press (1) according to claim 7, in which at least part of the adjustment drives (39 - 42) are spatially arranged outside of a force path (Fs), wherein the force path (Fs) is formed in the press end position by at least the base body or base bodies (21; 21*), the positive-stop devices (47 - 50) and the punches (22 -24).

9. The press (1) according to claim 7 or 8, in which each of the adjustment drives (39 - 42) comprises an electric motor and each of the electric motors has its own control, wherein the control means of the adjustment drives (39, 40), adjusting a common punch carrier (28; 29), are driven in synchronism with each other.

10. The press (1) according to any of claims 7 to 9, in which the die (2) is adjustably supported in a press frame of the press (1) by means of a die adjustment device (9) in parallel to the adjustment direction of the punches (22 - 25; 25*).

11. A modular system of a ceramic-powder and/or metal-powder press tool according to any of claims 1 to 6, or a modular system of a ceramic-powder and/or metal-powder press according to any of claims 7 to 10, comprising at least two components freely selectable as needed for a pressed part to be pressed from the group comprising
- supporting devices,
- positive-stop devices, optionally comprising non-height-adjustable positive stops,
- coupling rods, and
- punch carriers,
- wherein the at least two of the components are each variably available in various dimensions.

12. A method for assembling a ceramic-powder and/or metal-powder press tool according to any of claims 1 to 6, or a ceramic-powder and/or metal-powder press according to any of claims 7 to 10, in which
- the positive-stop device (47) which supports that one of the punches (23) and its punch carrier (27) via which the highest effective force (F3) acts in relation to the other punches (22, 24 - 25) in the press end position, is selected to be a rigid or rigidly acting positive-stop body, and
- at least one other one of said positive-stop devices (49, 50) is selected to be a height-adjustable positive-stop device.

13. The method according to claim 12, in which the positive-stop devices (47 - 50) are arranged to direct the pressing force (Fp) of a press drive (7) in the press end position via the base body (21), in particular via support devices (51 - 54) interposed between the positive-stop devices (47 - 50) and via the positive-stop devices (47 - 50) to the punches (22 - 25) and thereby completely around at least part of the punch carriers (26 - 29).

14. The method according to claim 12 or 13, in which the positive-stop device (47°) which supports that one of the punches (23) and its punch carrier (27) via which the highest effective force (F3) acts in relation to the other punches (22, 24 - 25) in the press end position, is used as a height-adjustable positive-stop device (48°) comprising a force-transmitting adjustable element (56) and a force-transmitting counter-element (57), wherein the adjustable element (56) comprises a positive-stop stop (59), wherein the positive-stop stop (59) is adjusted against a positive-stop counter-stop (60) of the force-transmitting counter-element (57), and
- at least one other of the positive-stop devices (26, 28, 29) is formed as a height-adjustable positive-stop device.

15. A method of operating a ceramic-powder and/or metal-powder press according to any of claims 7 to 10, in which each of the adjustment drives (39, 40; 41, 42) commonly adjusting one of the punch carriers (28; 29) are driven to synchronously adjust each punch carrier (28; 29).

16. A method for assembling a ceramic-powder and/or metal-powder press tool according to any of claims 1 to 6, or a ceramic-powder and/or metal-powder press according to any of claims 7 to 10, in which
- the punch carriers (26 - 29) are coupled with the adjustment drives (39 - 42) pre-arranged within the press (1) only after or as the tool is inserted into the press (1).

## Revendications

1. Outil de presse à poudre céramique et/ou à poudre métallique comportant
- au moins un corps de base (21 ; 21*),
- une pluralité d'au moins deux poinçons (22 - 25 ; 25*) qui sont disposés, dans une position de pressage, de façon à plonger depuis un côté dans une ouverture de matrice (3) d'une matrice (2) remplie de poudre céramique et/ou métallique (P),
- une pluralité d'au moins deux porte-poinçons (26, 27, 28, 29) sur lesquels est monté chaque fois un des poinçons (24, 25 ; 25*), au moins une partie des porte-poinçons (28 ; 29) pouvant être accouplée à chaque fois au moins deux entraînements de réglage (39, 40 ; 41, 42) et les porte-poinçons (26 - 29) étant disposés réglables les uns par rapport aux autres et par rapport au corps de base (21) ; et
- des dispositifs de butée fixes (47, 48, 49, 50 ; 48°) qui sont disposés de façon à dériver au moins partiellement, dans une position finale de pressage, une force de pressage (Fp) des poinçons (22 - 25) via le corps de base (21),
**caractérisé en ce que**
- au moins un des porte-poinçons (28 ; 29) est accouplé ou fixé à au moins deux de tiges d'accouplement (30, 31 ; 32, 33), broches (35 - 38) et/ou écrous de broche, chaque tige d'accouplement (30, 31 ; 32, 33) pouvant être accouplée ou fixée à chaque fois un entraînement de réglage propre (39, 40 ; 41, 42) et chaque broche (35 - 38) et/ou écrou de broche faisant chaque fois partie intégrante d'un entraînement de réglage propre.

2. Outil de presse selon la revendication 1, dans lequel une partie des dispositifs de butée fixes (49) ou des dispositifs d'appui (53) disposés entre ceux-ci présentent des paliers (55) à travers lesquels les tiges d'accouplement (30, 31) sont guidées.

3. Outil de presse selon l'une des revendications 1 ou 2, dans lequel
- le dispositif de butée fixe (48°) qui supporte le poinçon et son porte-poinçon (27) sur lequel agit, dans la position finale de pressage, la force la plus élevée (F3) par rapport aux autres poinçons (22, 24 - 25) est réalisé sous la forme d'un dispositif de butée fixe (48°) réglable en hauteur comportant un élément réglable (56) transmettant la force et un contre-élément (57) transmettant la force, dans lequel l'élément réglable (56) présente une butée de butée fixe (59), la butée de butée fixe (59) étant réglée contre une contre-butée de butée fixe (60) du contre-élément (57) transmettant la force et
- au moins un autre des dispositifs de butée fixes (26, 28, 29) est réalisé sous la forme d'un dispositif de butée fixe réglable en hauteur.

4. Outil de presse selon l'une des revendications précédentes, dans lequel au moins un des dispositifs de butée fixes et/ou au moins un dispositif d'appui (54) disposé entre les dispositifs de butée fixes (47 - 50) renferme(nt) ou présente(nt) un espace de réception de porte-poinçon (62) qui permet un mouvement libre d'un porte-poinçon (28) reçu dans l'espace de réception (62) dans et contre une direction de pressage des poinçons (24).

5. Outil de presse selon l'une des revendications précédentes, dans lequel les porte-poinçons (26 - 29) présentent une extension allongée, en forme de branche ou en forme d'étoile et les branches ainsi formées sont accouplées ou fixées aux entraînements de réglage (39, 40) par l'intermédiaire de tiges d'accouplement (30, 31).

6. Outil de presse selon l'une des revendications précédentes, comportant une pluralité d'entraînements de réglage (39 - 42), au moins deux des entraînements de réglage (39, 40) étant accouplés à au moins un des porte-poinçons (26 - 29) et les entraînements de réglage (39 - 42) présentant chaque fois un moteur électrique et chacun des moteurs électriques présentant une régulation propre, les régulations des entraînements de réglage (39, 40) réglant un porte-poinçon commun (28 ; 29) étant commandées de manière synchronisée.

7. Presse à poudre céramique et/ou à poudre métallique comportant
- au moins un dispositif de réception et/ou de fixation (63) qui est conçu pour l'insertion d'un outil de presse (20 ; 20*) selon l'une des revendications précédentes,
- un entraînement de presse (7), dont la force de pressage (Fp) peut être introduite via ledit au moins un dispositif de réception et/ou de fixation (63) dans le corps de base (21) et dans un autre corps de base (21*), opposé au corps de base (21), de cet outil ou d'un outil opposé (20 ; 20*), et
- une pluralité d'entraînements de réglage (39 - 42), au moins deux des entraînements de réglage (39, 40) étant accouplés à au moins un des porte-poinçons (26 - 29) d'un tel outil de presse (20 ; 20*) inséré.

8. Presse (1) selon la revendication 7, dans laquelle au moins une partie des entraînements de réglage (39 - 42) est disposée spatialement en dehors d'un chemin de force (Fs), le chemin de force (Fs) dans la position finale de pressage étant formé par au moins le ou les corps de base (21 ; 21*), les dispositifs de butée fixes (47 - 50) et les poinçons (22 - 24).

9. Presse (1) selon l'une des revendications 7 ou 8, dans laquelle les entraînements de réglage (39 - 42) présentent chaque fois un moteur électrique et chacun des moteurs électriques présente une régulation propre, les régulations des entraînements de réglage (39, 40) réglant un porte-poinçon commun (28 ; 29) étant commandées de manière synchronisée.

10. Presse (1) selon l'une des revendications 7 à 9, dans laquelle la matrice (2) est montée réglable parallèlement à la direction de réglage des poinçons (22 - 25 ; 25*) dans un châssis de presse de la presse (1) au moyen d'un dispositif de réglage de matrice (9).

11. Système modulaire d'un outil de presse à poudre céramique et/ou à poudre métallique selon l'une des revendications 1 à 6 ou système modulaire d'une presse à poudre céramique et/ou à poudre métallique selon l'une des revendications 7 à 10, comportant au moins deux composants pouvant être choisis librement selon les besoins pour une pièce à presser dans le groupe formé par les
- dispositifs d'appui,
- dispositifs de butée fixes, en option y compris butées fixes non réglables en hauteur,
- tiges d'accouplement et
- porte-poinçons,
- lesdits au moins deux composants étant mis à disposition avec chaque fois différentes dimensions disponibles de manière variable.

12. Procédé pour assembler un outil de presse à poudre céramique et/ou à poudre métallique selon l'une des revendications 1 à 6 ou une presse à poudre céramique et/ou à poudre métallique selon l'une des revendications 7 à 10, selon lequel
- le dispositif de butée fixe (47) qui supporte le poinçon (23) et son porte-poinçon (27) sur lequel agit, dans la position finale de pressage, la force la plus élevée (F3) par rapport aux autres poinçons (22, 24 - 25) est sélectionné sous la forme d'un corps de butée fixe rigide ou agissant rigidement et
- au moins un autre des dispositifs de butée fixes (49, 50) est sélectionné sous la forme d'un dispositif de butée fixe réglable en hauteur.

13. Procédé selon la revendication 12, selon lequel les dispositifs de butée fixes (47 - 50) sont disposés de façon que la force de pressage (Fp) d'un entraînement de presse (7) dans la position finale de pressage soit dirigée vers les poinçons (22 - 25) via le corps de base (21), en particulier via des dispositifs d'appui (51 - 54) insérés entre les dispositifs de butée fixes (47 - 50) et via les dispositifs de butée fixes (47 - 50) et contourne ce faisant entièrement au moins une partie des porte-poinçons (26 - 29).

14. Procédé selon l'une des revendications 12 ou 13, selon lequel le dispositif de butée fixe (47°) qui supporte le poinçon (23) et son porte-poinçon (27) sur lequel agit, dans la position finale de pressage, la force la plus élevée (F3) par rapport aux autres poinçons (22, 24 - 25) est réalisé sous la forme d'un dispositif de butée fixe (48°) réglable en hauteur comportant un élément réglable (56) transmettant la force et un contre-élément (57) transmettant la force, dans lequel l'élément réglable (56) présente une butée de butée fixe (59), la butée de butée fixe (59) étant réglée contre une contre-butée de butée fixe (60) du contre-élément (57) transmettant la force et
- au moins un autre des dispositifs de butée fixes (26, 28, 29) est réalisé sous la forme d'un dispositif de butée fixe réglable en hauteur.

15. Procédé pour faire fonctionner une presse à poudre céramique et/ou à poudre métallique selon l'une des revendications 7 à 10, selon lequel les régulations des entraînements de réglage (39, 40 ; 41, 42) réglant chaque fois en commun un des porte-poinçons (28 ; 29) sont commandées de manière à régler le porte-poinçon (28 ; 29) de manière synchrone.

16. Procédé pour assembler un outil de presse à poudre céramique et/ou à poudre métallique selon l'une des revendications 1 à 6 ou une presse à poudre céramique et/ou à poudre métallique selon l'une des revendications 7 à 10, selon lequel
- les porte-poinçons (26 - 29) ne sont accouplés aux entraînements de réglage (39 - 42) déjà disposés auparavant dans la presse (1) qu'après ou lors de l'insertion de l'outil dans la presse (1).
